# EUROPEAN PATENT SPECIFICATION

(11) **EP 1 164 330 B1**
(45) Date of publication and mention of the grant of the patent: **08.12.2004**
(21) Application number: 01202283.6
(22) Date of filing: 14.06.2001
(51) Int. Cl.: F22B 31/00, F23G 5/46

(54) **Method for generating steam using a waste incinerator**
Verfahren zum Erzeugen von Dampf mittels einer Müllverbrennungsanlage
Procédé pour produir de la vapeur utilisant un incinérateur d'ordures

(30) Priority: 14.06.2000 NL 1015438
(43) Date of publication of application: 19.12.2001
(73) Proprietor: Gemeente Amsterdam, Gemeentelijke Dienst Afvalverwerking, 1045 BA Amsterdam (NL)
(72) Inventor: van Berlo, Marcellus Antonius Jozef, 1058 EN Amsterdam (NL)
(74) Representative: Kupecz, Arpad

(56) References cited:
- EP-A- 0 903 536
- DE-A- 19 531 027
- "VALUABLE ENERGY FROM WASTE" ABB REVIEW, ABB ASEA BROWN BOVERI, ZURICH, CH, no. 1, 1989, pages 15-22, XP000186057 ISSN: 1013-3119
- PATENT ABSTRACTS OF JAPAN vol. 1998, no. 05, 30 April 1998 (1998-04-30) & JP 10 009545 A (BABCOCK HITACHI KK), 16 January 1998 (1998-01-16)
- SCHATZ U: "KOOPERATION VON BETREIBER UND KONSTRUKTEUR FUEHRT ZUR EFFEKTIVEN AUSLEGUNG VON ECKROHR-MUELLKESSELN" VGB KRAFTWERKSTECHNIK,DE,VGB KRAFTWERKSTECHNIK GMBH. ESSEN, vol. 79, no. 11, 1999, pages 42-45, XP000859876 ISSN: 0372-5715

## Description

The present invention relates to a method for generating steam with a high energy efficiency with the aid of steam from a waste incinerator, as mentioned in the preamble of claim 1. A method for generating steam according to the preamble of claim 1 is known from DE-A-195 31 027. The generated steam is used in a turbine for the generation of electricity.

In the technique waste incinerators are generally well known. It is common practice with waste incinerators that the hot waste gases that are released by the incineration of the waste material are used to generate steam. For this the incinerator is equipped with a heat exchanger consisting of bundles of pipes through which steam is fed. The steam that is formed from the heat of the waste gases is fed to a heat exchanger for superheating, via a steam drum, which is a well-known technique. While the steam is generally superheated to a temperature of approximately 400°C, maximum 450°C, and a pressure of approximately 40 bars, a number of installations apply higher temperatures and pressures.

While up until now people have tried to improve the ultimate efficiency of the generation of electricity by these well-known installations, this efficiency for large modern installations being approximately 25% gross, 22% net, so far this has not been achieved. Generally the reason for this is to be found in the fact that the low joule value "fuel", the waste material, leads to corrosion in those parts of the installation that come into contact with the waste gases. The measures that are taken to combat this corrosion (low temperature of both the surface of the heat exchanger and the waste gases that come into contact with it) are at the cost of the total efficiency of the installation.

Recently the so-called fluidised bed incinerator and fluidised bed gasification have been applied as an alternative for the recognised and generally used directly fired ovens (which make use of an incinerator grid). However, these cannot be applied to all supplies of waste materials. In addition, more corrosion-proof materials have been used, such as nickel-chromium alloys.

The invention has the aim of improving the known techniques of directly fired ovens, wherein a higher efficiency can be achieved in the ultimate electricity generation with the help of the steam that is generated. One specific aim is also that the installation should require a minimum of maintenance.

According to a first improvement in the state of the art of this technique the aims stated here are achieved using a method as indicated in the preamble, which is characterised by the measures as stated in the characterizing part of Claim 1. This principle is generally known in thermodynamics, but with waste incineration it is faced with the problem that superheating of the waste gases using a bundle of pipes has the same corrosion problems as a similar superheater. Furthermore the design of the boilers must be dimensioned such that the waste gases have enough heat content to cause both the superheating and the reheating. In the case of waste material incineration, this is faced with practical drawbacks because it leads to high waste gas temperatures in the superheaters and reheaters. Because of this, this solution, which is common in coal-fired and gas-fire generating plants, is not used for waste incineration.

There are many examples of ways to get around this. In EP 0 325 083 a description is given of the use of a separate boiler in which the superheating and reheating of steam generated by burning waste takes place by using a better fuel (gas, oil, coal).

Many special constructions have also been invented to find practical solutions for enabling the superheating to be generated by the waste gases. For this EP 0 981 015 offers a design wherein the superheater is located in the part of the boiler that radiates the heat, protected against the effects of corrosion by a separate wall. WO 95/00804 provides an indirect heat transfer by means of fine ashes that are heated in the waste gases and transfer their heat to a superheater in a separate fluidised bed.

In nuclear installations for example, the problem is often to superheat the steam enough and the current technique is to reheat (often even several times, between the various stages of the turbine) with steam that is collected at the inlet to the turbine (example: Stanisa, B: Erozion Rotorblades, The VIIIth Conference Steam Turbines of Large Output, Karlovy Vary 30.10 - 02.11.1984; Sammelwerk; pages 409/419).

A similar solution for incinerating waste material has been developed by KEMA Nederland and was presented during the Powergen conference in Bangkok, Thailand on September 20 - 22, 2000.

In "Valuable Energy From Waste, ABB Review, Zurich, CH, no. 1, 1989, pp 15-22, XP000186057, ISSN 1013-3119" a similar solution is described wherein reheating is carried out by collecting steam in front of the turbine inlet and piping it to the reheating heat exchanger. So in the last two cases indirect reheating is used with steam as the medium. However the construction is such that the heat that is needed for the reheating is to a large extent extracted from the waste gases via the superheaters. This means that this design, because of the corrosion-critical parts, must be dimensioned larger than without the reheating. Furthermore the waste gases must be at a high enough temperature to be able to supply this heat, which increases the likelihood of corrosion.

The current invention solves the problem of the required high waste gas temperatures by carrying out the reheating of the steam from the first turbine with the help of steam that comes directly from a steam drum. This is different from the three last methods referred to in which the heat from the waste gases is transferred to the reheater via steam that has also gone through the superheaters.

In this way the heat required for the reheating is extracted from the membrane walls in the first part of the boiler and high gas temperatures for the superheaters are not necessary. An extra degree of freedom exists in the boiler design because the pressure of the stage of the turbine where the reheating takes place can be selected. In this way the thermal load for the reheating (via the membrane walls) and the thermal load for the superheating can be balanced out. With high pressure in the boiler especially, it is advantageous to extract a lot of heat from the membrane walls because with pressures above 80 bars the heat evaporation for the forming of steam in the membrane walls decreases. The invention described here thereby offers new possibilities for tuning the boiler and the turbine design to each other. This contributes to an increase in efficiency if the pressure is higher than 70 bars, preferably higher than 100 bars, and with the greatest preference being approximately 125 bars.

According to a further design the waste incinerator is constructed such that the vertical waste gas exhaust that is mainly located above the incinerator grid (the so-called first draught), is at least 15 meters high, preferably from 20 to 25 meters, and has a diameter such that the speed of the gas is less than or equal to 8 m/sec, preferably from 3 m/sec to 5 m/sec, and wherein the temperature of the waste gas at the end of the first draught is less than 900°C, preferably less than 850°C, and more preferably less than 800°C, the waste gases being passed downwards in a second draught, with a height of at least 8 meters, and then preferably connected to a third draught, wherein the temperature of the waste gases at the end of the third draught is less than 720°C, preferably less than 660°C, and more preferably less than 630°C, and wherein the speed of the waste gases at the end of the third draught is from 3 m/sec to 4 m/sec. According to a further preferred embodiment the third draught is constructed at an angle α of from 45° to 60°.

In a similar design of the waste incinerator, a decrease in the temperature of the waste gases is achieved compared to that which is normally achieved at the end of the first draught. This means that lower deposits of fly ash on the walls in the second draught will take place. Furthermore, because of an equal decrease in temperature the amount of carbon monoxide is decreased. In addition, by adapting the second and third draughts, for example by raising them or widening them, such that the higher speed is limited to a speed of less than 5 m/sec, preferably from 3 m/sec to 4 m/sec (with the exception of the U-turn from the second draught to the third draught wherein higher speeds can certainly be achieved in connection with the fly ash separation), the first achievement is that the waste gases have more time to cool off, and also wherein the advantage is achieved that the ashes contained in the waste gases can be separated more simply.

It is preferred that the heat exchanger is used in a counterflow. For this the preference is for the first pipes upstream in the heat exchanger to be evaporation pipes, seen from the direction of movement of the waste gas, because these pipes will be exposed to the waste gases with the highest temperatures. Because of the relatively high temperature of the waste gases at the entry point to the heat exchanger, it is preferable to have at least two rows of evaporation pipes, these rows being placed parallel to each other and perpendicular to the flow direction of the waste gas, and wherein the pipes in the individual rows are at any rate for the most part placed in the path of the waste gas. It is preferable to locate the separate pipes in the different rows parallel to each other.

The temperatures that are mentioned in this description relate to all temperatures for which a boiler is designed, in normal use and with a normal rate of contamination. A new boiler or a boiler that has just been cleaned, or a very dirty boiler that must be cleaned, will be able to work with other temperatures than those that are mentioned here.

The following paragraphs describe embodiments of the invention based on the accompanying drawings.
Figure 1 shows a schematic view of a waste incinerator plant, wherein waste gases from an incineration bed are passed through a first, second and third draught, after which the waste gases are passed through a heat exchanger to the exhaust.
Figure 2 shows a schematic view from above of a plant as shown in Figure 1.
Figure 3 shows a schematic flow for generating electricity with the aid of steam.

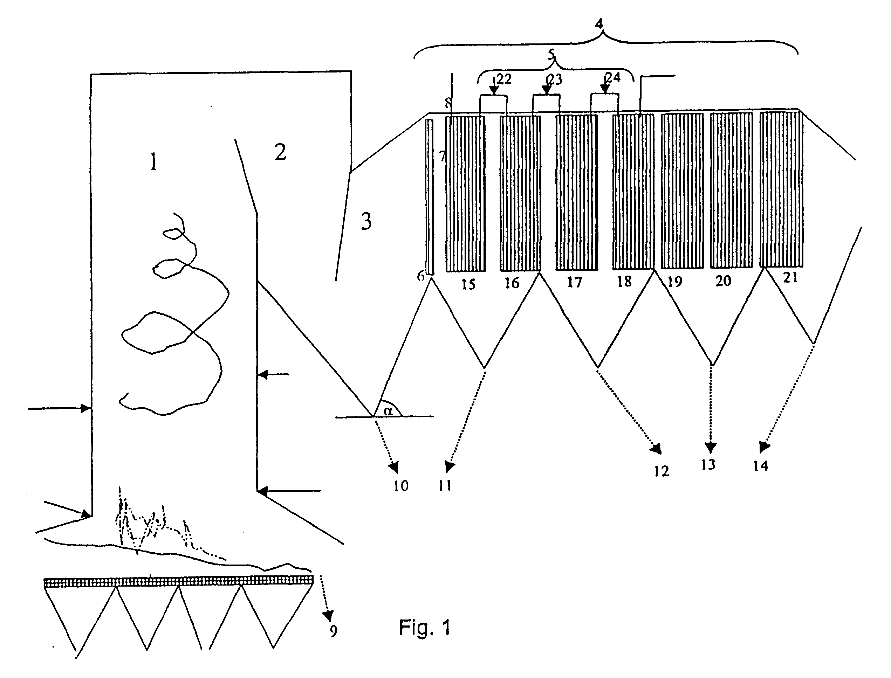

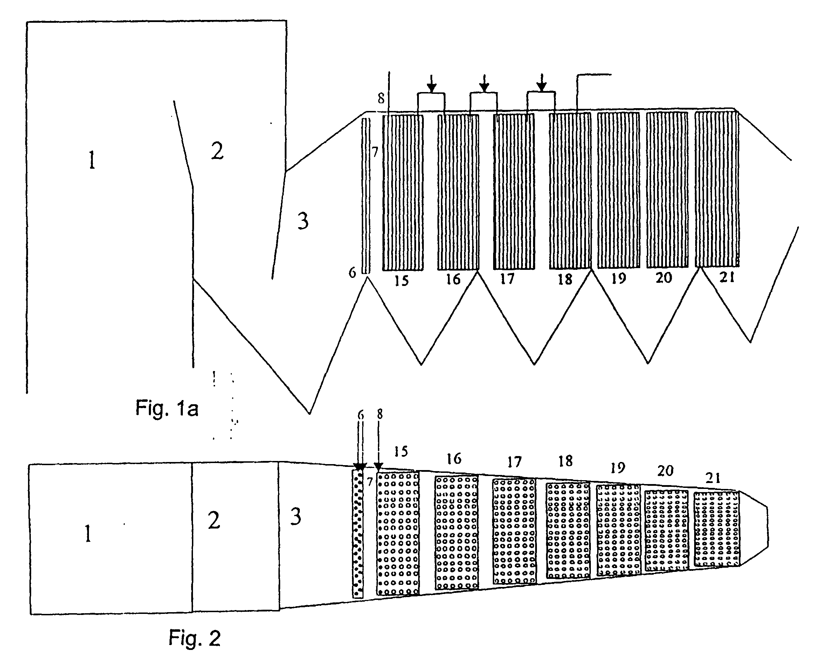

Figure 1 shows a schematic view of a waste incinerator plant. The waste gases are passed to a first draught (1), where they rise vertically and are then routed to a second draught (2), where the waste gases are passed downwards and routed to a third draught (3). The first draught is made out of a well-known membrane wall (not shown), among other things. In the highest part of the first draught (1) the waste gases are at a temperature lower than 900°C, preferably lower than 850°C. In addition, the speed of the waste gases in the first draught must be slower than 8 m/sec, preferably from 3 m/sec to 4m/sec. In this way an equal temperature drop is achieved, wherein the amount of carbon monoxide can be lessened. Thereby it is also possible to carry out a reduction of nitrogen oxide using ammonia injection. The lowering of the maximum temperature in the upper part of the first draught can be achieved by making the first draught (1) higher, or by increasing its diameter. In any case the first draught (1) must be at least 15 metres high, and preferably from 20 to 25 metres high. This prevents the waste gases depositing a lot of parts on the walls, because in this case the possibility of deposits forming are minimal. From the point of view of flow technique, this does not result in any problems, provided provisions are made for a sufficient mixing of the waste gases. Among other ways, this can be achieved by the known technical method of supplying a secondary and a third gas. Because of the lower speed of the gases in the whole of the first draught, so also in the part directly above the flame front, significantly less boiler ash and fly ash is created.

The waste gases that leave the third draught (3) are then passed to a heat exchanger (4) in the form of a steam superheater (SSH) (5). In the form shown this SSH consists of four separate series of heat exchange pipes (15, 16, 17, 18). Compared to known waste incinerator plants the temperature of the waste gases entering the SSH is relatively low here, namely in the range of approximately 600°C to 670°C, and preferably limited to approximately 630°C. A so-called evaporation wall (6) is located at the start of the heat exchanger (4). This evaporation wall (6) has the function of making the flow of the waste gases to the heat exchanger (5) uniform. For this it is preferable that the evaporation wall (6) consists of two rows of evaporation pipes, as shown in Figure 2. Next to these two rows of evaporation pipes it is preferable to have a small space (7) on the other side of which one subsequent row of evaporation pipes (8) is located, after which the first rows of heat exchanger pipes (8) are located, in line with the pipes of the last row of evaporation pipes, as shown in Figure 2. The small open space (7) must preferably be long enough that the waste gas speed across the entire diameter in this open space (7) can be smoothed out, wherein the speed of the flow of the gases is virtually the same in all places.

The evaporation wall (6) is technically a collecting point for fly ash, and a rapid cooling of the waste gases has a delaying effect on the nucleus of the parts of fly ash that are in the waste gases, wherein these remain at a temperature of more than 850°C and are therefore still in the so-called 'sticky phase'. This means that the parts of fly ash, when they come into contact with the consecutive pipes of the evaporation wall, will stick to their surface. These parts of fly ash will also to a large extent stick to the heat exchanger pipes. Therefore, seeing that the sticky phase is achieved by temperatures of 850°C and higher, it is preferable to lower the temperature of the waste gases in the second and third draught from 850°C to 630°C. This can be achieved, for example, by decreasing the speed of the waste gases in the second and third draughts. Furthermore, this decrease in the speed of the waste gases results in the boiler ash separation (10) being improved. This also has the result that the growth of contamination of the heat exchanger pipes is lessened. This growth in ash can be removed from the pipes using a technically well known method. By separating the boiler ashes (10, 11, 12, 13, 14) thus removed into coarse (10, 11), and fine ash (12, 13, 14), reuse of these boiler ashes is very well possible. The coarse boiler ash (10) especially contains few heavy metals and salts, and furthermore no dioxin (waste gas temperatures above 450°C do not give off dioxin). The boiler ash (11) that is collected under the first part of the heat exchanger also meets this requirement. The fine boiler ash (12, 13, 14) is contaminated with dioxin, among other things.

The ash (12, 13, 14) that is passed out of the next parts of the heat exchanger contains larger amounts of contaminating material. Because the ashes so created are collected separately, the total amount of contaminated fly ash is lessened considerably.

Waste material that cannot be burnt (slag) is extracted at (9).

The transition from the vertical downward directional second draught to the upward directional slanting third draught can be optimised as far as flow techniques go by locating the third draught at an angle (α) from 30° to 70°, preferably from 50° to 65°, as shown in Figure 1A. By using such an angle, the result is that the gasses are fed to the heat exchanger without much loss in their kinetic energy, wherein an improved separation of fly gas is still achieved. Choosing an angle (α) not less than 45° results in the still somewhat sticky fly ash in the waste gases being easily transported over the wall and collected as boiler ash (10). The waste gases that are supplied to the heat exchanger (4) are at a temperature of from 600°C to 700°C, approximately. In the case when the temperature of the waste gases is in the lowest part of this range, it is not necessary to use an evaporation wall for the purpose of lowering the temperature of the waste gases. If the waste gases are at a higher temperature, it is useful to use an evaporation wall to lower the temperature. The decrease in temperature as a result of this evaporation wall must, however, be limited to less than 30°C, so as not to negatively influence the efficiency of the boiler. As previously mentioned in this document, the evaporation wall especially serves to equalise the gas flow, and is therefore preferably always present in the construction.

The efficiency of the heat exchanger, which consists of the steam superheaters (15, 16, 17, 18), generally indicated by SSH, can be increased by placing these superheaters in a contraflow system. The first steam superheater (15), seen from the direction of the flow of the gases, must in that case be designed especially with a high steam speed in the pipe and low waste gas speed, to make sure that the surface temperature of the pipes remains low. Because this first SSH bundle is exposed to the highest temperature both on the steam side and the waste gas side, this first SSH will be the one under most load. It is therefore preferable to make the pipes of the first SSH of nickel chromium alloy. The temperature of the waste gases must hereby remain lower than 720°C, preferably lower than 670°C, for example from 600°C to 670°C, wherein the surface temperature of the nickel chromium alloy does not rise above 600°C. In practise this means that it is preferable that the evaporation wall (6) equalises the flow, so that local high flow rates are avoided. The speed of the waste gases is preferably from 3 m/sec to 4 m/sec, wherein the surface temperature of the pipes remains lower than the temperature of the waste gases. For this it is preferable that the evaporation bundle (6) is installed across the entire width of gas flow at the heat exchanger (4). It is however possible to reduce the total number of_pipes in the evaporation bundle (6), wherein the distance between each of the pipes will be from 20 to 50 centimetres. If more rows of evaporation walls (6) are used, then it is preferable that the pipes in each row are placed in the heat exchanger, in a staggered arrangement. In this case it is preferable that the pipes are placed parallel to each other. In this way an equal flow across the height and width of the waste gases is achieved, before these enter the superheater (15). As the first row of pipes in the first superheater (15) receive a free flow, it is preferable that these are constructed as evaporation pipes (8). The other pipes of the first SSH (15) are fitted next to each other, behind the evaporation pipes (8). The protection of the SSH pipes by the evaporation pipes is especially improved if the evaporation pipes are constructed with a diameter slightly larger than the SSH pipes that lie behind them (seen in the direction of flow of the waste gases). In another preferred variation the superheater pipes are constructed in a slightly oval shape wherein the smallest diameter is transverse to the direction of the flow of the waste gases. In this way wear on the pipes as a result of erosion by fly ash in the waste gases is lessened. The well-known technical method wherein the growth of fly ash on the SSH pipes is continually removed, by making the SSH pipes vibrate (for example by hitting the headers in which the pipes with their extremities are installed with a mechanical or pneumatic hammer), can be considerably improved by designing the SSH pipes such, that these have natural frequencies which are different in respective cross-section directions, as a result of the differences in stiffness resulting from the fact that pipes are not exactly round. By now vibrating the header at such specific natural frequencies, one can manage the removal of the fly ash deposits that have accumulated. By tuning each of the natural frequencies of the pipes to each other well (all the same), a limited amount of energy is required to obtain a maximum result. If this is difficult because the attached mass of fly ash accumulations is to differs too much, it is also possible to give each of the SSH pipes its own natural frequency (and this will also be different for the various vibration directions) so that it is possible to resonate the pipes separately. Therefore the preference is for a system in which the oval pipes each have their own specifically chosen natural frequency, which can be used to make the pipes resonate by a well chosen (tunable) excitation system.

At the second bundle (16) of the heat exchanger, or the second SSH (16), the waste gas flow is already equally distributed, a considerable amount of dust is already separated out, and furthermore the temperature of the waste gases is lowered. After this first SSH the speed of the waste gases can be increased, either by making the boiler smaller, which can be done in steps or in a gradual manner, or by increasing the number of pipes for each surface unit. In addition, it is possible to combine both forms of construction. Depending on the number of SSH superheaters (15, 16, 16, 18) that are placed behind each other in the heat exchanger (4), these are designed such that the speed of the waste gas will increase as the gases pass further through the heat exchangers. From the SSH superheaters the remaining waste gases, which are still at a high temperature of approximately 400°C, pass on to one or more economisers (19, 20, 21). These serve to preheat the condensed steam, for example. The speed of flow here will be approximately from 5 m/sec to 15 m/sec, preferably approximately 10 m/sec, to prevent the formation of dioxins in the waste gases.

As previously stated, in the case where four SSH superheaters (15, 16, 17, 18) are available in the heat exchanger, the steam to be heated is supplied to the fourth SSH (18), then to the third superheater (17), then to the second SSH (16), and then to the first SSH (15), from which the steam as superheated steam at a temperature of approximately 510°C and with an increased pressure of approximately 125 bars, is extracted. It is possible to install an injection cooler (24) at the pathways between each of the SSH superheaters, by which the temperature of the steam can be regulated. By installing such an injection cooler (22, 23, 24) ate each of the pathways from one superheater to another, good regulation of a wide range of temperatures can be guaranteed. Furthermore, it is thereby possible to accurately regulate the steam temperature in the case of unequal deposits in the various SSH bundles.

It is also possible to increase the efficiency of the installation by lowering the final exhaust temperature of the waste gases from the boiler-economizer section. However, this can cause the problem that SO3 condensation takes place in cold places wherein sulphuric acid corrosion can occur. This is especially the case with contaminated fuel that is used in waste material incinerator plants. It is therefore preferable to pass the waste gases out of the installation at a temperature from 190°C to 230°C, these temperatures being valid for a clean boiler and a dirty boiler, respectively.

This relatively high exhaust temperature of the waste gases is an advantage for using a baghouse filter directly following the boiler (not shown). In this case, less corrosion will occur with the use of the filter and it is possible to install a Denox catalysator and a PCDD/F oxidation catalysator, if required. After passing through this baghouse filter, the waste gases will be largely free of ash, wherein it is suitable to pass the waste gases to an extra economiser (not shown), which can be used for preheating condensed steam, for example. This extra economiser is extremely efficient, because it no longer needs to cope with dust. The surface of the pipes of this economiser therefore stays a lot cleaner.

In this extra (second) economiser the temperature of the waste gases can be lowered to around 100°C. Below a temperature of 160°C condensation of acid will generally occur. Because the condensed steam that is to be heated is at a relatively low temperature, condensation can occur in the entire second economiser. For this reason, this second economiser must be made of non-metallic, and especially non-oxidising, material. The preference is for materials such as graphite, Teflon, and enamel.

It is also possible to use a third economiser placed after the waste gas cleaning to lower the temperature of the waste gases to around 50°C. Because the condensed steam to be heated is preferably used directly from the turbine condenser, and because it is at a temperature significantly under the dewpoint temperature of the waste gases, the heat that is gained here comes virtually completely from the condensation heat of the moisture in the waste gases. Because much lower concentrations of chemically aggressive materials exist at the end of the waste gas cleaning and because these are diluted by the superfluous condensation, the material requirements for this third economiser are not as extreme as those for the second economiser. The cooling of the waste gases and the condensation of the moisture lead to an extra separation as regards dust, mercury, and dioxins.

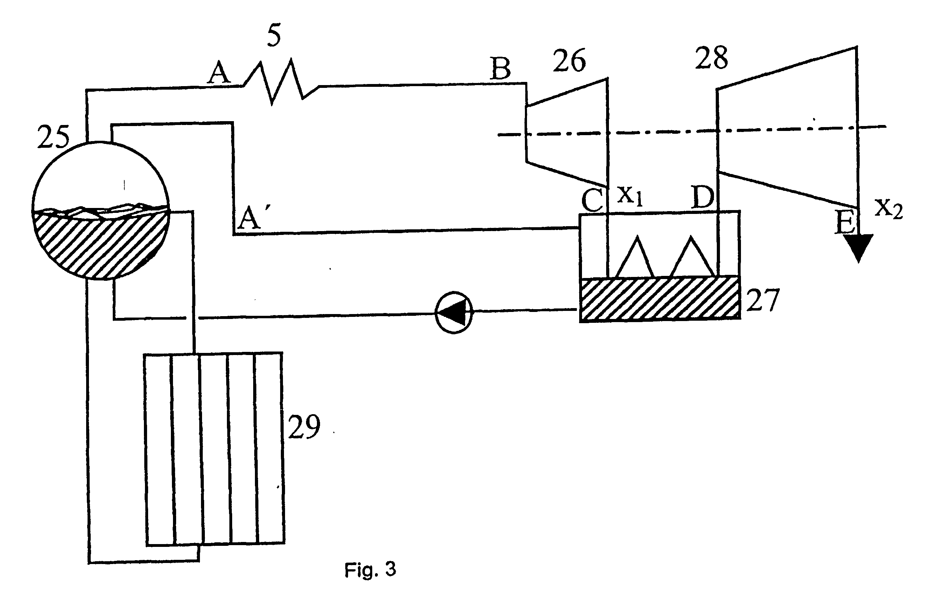

In Figure 3 a schematic is shown of a preferred design for electricity generation with the aid of steam. Steam (A) is supplied from a steam drum (25) to the heat exchanger (5), which consists of the SSH superheaters (15, 16, 17, 18), at a pressure of 135 bars, and at a temperature of 337°C. By heating up the steam (A) with the aid of the hot waste gases in a contraflow, steam (B) is extracted from the heat exchangers (5) at a temperature of 510°C and a pressure of 125 bars. This steam (B) is then passed to the first stage of a turbine, where it exits as steam (C) with a pressure of approximately 8 bars and at a temperature of approximately 180°C. Next reheating of the steam (C) takes place, with the aid of steam (A') that is taken directly from the steam drum (25). In this extra heat exchanger stage (27) the steam (C) is converted into steam (D) at a temperature of approximately 320°C, and at a pressure that is only slightly lower than after it leaves the first stage (26), namely approximately 7.5 bars. After the second turbine stage (28) the steam (E) will be at a temperature from 30°C to 60°C and a pressure of approximately from 0.05 to 0.10 bars. For the production of the steam (A) it is preferable to increase the temperature of the steam (A), in order to increase the efficiency. For this the choice can be carefully determined, because increasing the temperature of the steam (A) also determines the temperature of the pipe wall in the steam superheater. By making the pipes of the superheater completely of nickel chromium alloys, or coating them with nickel chromium, it is possible to increase the temperature limit, which is usually in the range 400°C to 430°C. For this there is of course a definite preference for supplying a very homogeneous flue gas temperature at the entry point to the steam superheater.

The logical consequence of a higher steam temperature is that there is also a higher steam pressure in order to obtain maximum efficiency in the turbine (26, 28). This is also necessary in order to maintain manageable moisture percentages. This means that the thickness of the sides of the pipes and the parts of the boiler increases. The turbine must also be suitable for these higher temperatures and pressures. By using nickel chromium in the superheaters and the walls of the boiler, these higher temperatures and pressures are quite usable, however. In order to optimise the use of steam, reheating of the steam (C) after the highpressure area in the turbine is required. This helps to prevent the steam (C, D) condensing into moisture percentages that are no longer manageable, during the next expansion stage. The reheating of the steam (C) after the first turbine stage (26) takes place using steam (A') that is extracted from the steam drum (25). In the main the steam (A') will be at the same temperature and pressure as steam (A), seeing that this comes from the same steam drum, according to the design shown. As is generally known in technical circles, the steam drum serves to separate the mixture of water and steam that comes from the heat exchanger (29). By using this steam (A') directly for reheating the steam (C) from the first turbine stage one can achieve a great amount of freedom for the design of the boiler. The thermal charge of the membrane walls (29) (the evaporators in the radiation area) can especially be enlarged, without this being dependent on the superheaters (steam superheater in the convection area). This means that on the side where the flue gas is the variation of the temperature can be optimally chosen. The extra capacity that is especially obtained from the membrane wall (29) through the reheating decreases the thermal capacity that is supplied by the superheater. The temperature of the flue gas for the steam superheater can be set relatively low using these measures, namely a flue gas temperature lower than 750°C, preferably lower than 720°C, more preferably from 600°C to 680°C, namely from 600°C to 650°C. The high flue gas temperatures that are necessary for a high thermal capacity in the superheater generally result in problems because they increase the corrosion and the growth of fly ash. Using these measures therefore means that these drawbacks no longer occur.

Other advantages of this construction are that the steam moisture percentages, shown in Figure 3 with the annotations x1 and x2 for the first and second turbine stage (26, 28), respectively, can be freely chosen. The average process temperature of the water-steam cycle, and therefore the efficiency of the turbine, is thereby as high as possible, at any chosen maximum steam temperature.

It is now possible to regulate the maximum steam temperature at a lower value without x2 becoming extremely high. The other way round is also possible.

Furthermore the possibility of erosion of the turbine blades decreases considerably because of the lower moisture percentages.

Because the proof against corrosion of nickel chromium alloys is considerably less at temperatures of 650°C to 700°C and more, it is preferable not to let the temperature of the pipes, and the other parts of the installation which come into contact with higher temperatures, rise to more than from 600°C to 650°C.

The measures described above are especially suitable for improving the efficiency of a waste incinerator with regard to the generation of electricity. The highest preference is for the combination of steam heating to a temperature of at least 450°C at a pressure of 70 bars, or preferably a temperature of at least 480°C and a pressure of at least 100 bars, and even more preferably a temperature of approximately 500°C and a pressure of at least 120 bars, as well as a decrease of the flue gas flow in the flue has passage to less than 5 m/sec, preferably from 3 m/sec to 4 m/sec, and a flue gas flow through the heat exchanger at the entrance of less than or equal to 5 m/sec and at the exit from 5 m/sec to 12 m/sec, with the use of a contraflow in the heat exchanger, and wherein the flue gases are at a temperature of less than 750°C, and preferably less than 690°C, at the point they are passed to the heat exchanger.

According to the invention improved efficiency will be achieved. Hereby it is possible to achieve an eventual efficiency in steam production of at least 29% gross / 26% net, or even better at least 33% gross / 30% net, or ultimately 36% gross / 33% net, if a method described in the invention described here is combined with a method described in the patent applications from the same inventors that are submitted at the same time as this patent application.

## Claims

1. A method for generating steam using a waste incinerator, wherein a first steam (A) is formed from water in a first heat exchanger (29) by heating same with flue gases from a waste incinerator and is then fed to a steam drum (25), conducting flue gases in a second heat exchanger (5) along bundles of pipes through which the first steam (A) from the steam drum (25) is fed in order to create a second steam (B) at a temperature of at least 450°C and at a pressure of at least 70 bar, and wherein the second steam (B) is fed to a first turbine stage (26),
**characterized in that** a third steam (C) leaving the first turbine stage (26) is reheated in a third heat exchanger (27) with the aid of a fourth steam (A') which comes from the steam drum (25) so as to create a fifth steam (D) that is fed to at least one successive turbine stage (28).

2. A method according to Claim 1, **characterized in that** the fifth steam (D) is reheated to a temperature of at least 200°C, preferably from 280°C to 320°C.

3. A method according to Claims 1 and 2, **characterized in that** the second steam (B) is heated before (entering) the turbine to a temperature from 480°C to 520°C.

4. A method according to Claims 1 to 3, **characterized in that** the pressure of the second steam (B) is from 90 to 180 bar.

5. A method according to Claims 1 to 4, **characterized in that** the second heat exchanger (5) is used in counter current flow.

6. A method according to any of the preceding Claims, **characterized in that** the speed of the flue gases through the second heat exchanger (5) is ≤ 7 m/sec, preferably ≤ 5 m/sec at the entrance to the second heat exchanger, and is from 5 m/sec to 12 m/sec at the exit of the second heat exchanger.

7. A method according to any of the preceding Claims, **characterized in that** a fourth heat exchanger (6), which comprises evaporation pipes (6), is located upstream of the second heat exchanger (5), seen in the flow direction of the flue gas.

8. A method according to Claim 7, **characterized in that** the fourth heat exchanger (6) contains at least two rows of evaporation pipes (6), said rows being placed parallel to each other and perpendicular to the direction of the flow of the flue gas, and wherein the pipes of the separate rows are placed at least mostly in the flow path of the flue gas.

9. A method according to Claim 7 or 8, **characterized in that** an open space (7) exists following the evaporation pipes (6) in order to smooth out the flow of the flue gases, this open space being larger than the distance between each of the rows of pipes in the fourth heat exchanger.

10. A method according to Claim 9, **characterized in that** a row of evaporation pipes (8) is located before the rows of pipes of the second heat exchanger (5) and after the open space (7).

11. A method according to Claims 7 to 10, **characterized in that** the evaporation pipes (6, 8) are placed a distance of at least 20cm apart, and preferably at a distance 35cm to 45cm apart.

12. A method according to Claims 10 to 11, **characterized in that** the evaporation pipes (8) have a larger diameter than the superheater pipes that are located downstream in the flow direction of the flue gas.

13. A method according to any of the preceding Claims, **characterized in that** the second heat exchanger (5) consists of several sections (15, 16, 17) that each consist of superheater pipes that are not exactly round and that have their largest diameter in the flow direction of the flue gas.

14. A method according to Claim 13, **characterized in that** each of the natural frequencies of the non-round superheater pipes in various directions, perpendicular to the longitudinal direction of the pipes, are chosen such that by activating the pipe header, the pipes can be made to resonate with different frequencies.

15. A method according to any of the preceding Claims, **characterized in that** the first steam (A) at a temperature of 337°C and a pressure of 135 bar, is heated in the second heat exchanger (5), so as to form the second steam (B) at a temperature of 510°C and a pressure of 125 bar.

16. A method according to Claim 15, **characterized in that** the second steam (B) in the turbine in the first stage (26) is expanded by forming the third steam (C) at a temperature of 180°C and a pressure of 8 bar; subsequently is heated to form the fifth steam (D) at a temperature of 320°C and a pressure of 7.5 bar; and then is expanded in the successive turbine stage (28) so as to form a sixth steam (E) at a temperature of 30°C and a pressure of 0.05 bar.

17. A method according to any of the preceding Claims, **characterized in that** fly ash is withdrawn in two streams, wherein the first stream is withdrawn from the flue gas at a temperature higher than 400°C, preferably higher than 450°C, and a second stream is withdrawn from the flue gas at a temperature less than or equal to 500°C, and preferably less than or equal to 450°C.

18. A method according to any of the preceding Claims, **characterized in that** condensate is heated in a, seen in the flue gas flow direction, second economiser by exchanging heat with flue gases coming from the waste incinerator after same have been mainly cleaned of dust particles in a dust filter, and at a temperature and pressure such that condensation from the saturated flue gases takes place in the second economiser.

19. A method according to any of the preceding Claims, **characterized in that** condensate from the last turbine stage is heated in a, seen in the flue gas flow direction, third economiser by exchanging heat with flue gases near the exit of the flue gas cleaning, wherein condensation from the saturated flue gases takes place in the third economiser.

## Patentansprüche

1. Verfahren zum Erzeugen von Dampf mittels einer Müllverbrennungsanlage, bei welchem ein erster Dampf (A) aus Wasser in einem ersten Wärmetauscher (29) durch Erhitzen desselben mit Verbrennungsgasen aus der Müllverbrennungsanlage gebildet und danach einer Dampftrommel (25) zugeführt wird, die die Verbrennungsgase in einem zweiten Wärmetauscher (5) entlang von Rohrbündeln führt, durch welche der erste Dampf (A) von der Dampftrommel (25) geleitet wird, um einen zweiten Dampf (B) mit einer Temperatur von mindestens 450 °C und einem Druck von mindestens 70 bar zu bilden, und bei welchem der zweite Dampf (B) einer ersten Turbinenstufe (26) zugeführt wird,
**dadurch gekennzeichnet,**
**dass** ein dritter Dampf (C), welcher die erste Turbinenstufe (26) verlässt, in einem dritten Wärmetauscher (27) mit Hilfe eines vierten Dampfes (A') nacherhitzt wird, welcher von der Dampftrommel (25) kommt, so dass ein fünfter Dampf (D) gebildet wird, der mindestens einer nachfolgenden Turbinenstufe (28) zugeführt wird.

2. Verfahren nach Anspruch 1,
**dadurch gekennzeichnet,**
**dass** der fünfte Dampf (D) auf eine Temperatur von mindestens 200 °C, vorzugsweise zwischen 280 °C und 320 °C nacherhitzt wird.

3. Verfahren nach Anspruch 1 und 2,
**dadurch gekennzeichnet,**
**dass** der zweite Dampf (B) vor der (vor Eintritt in die) Turbine auf eine Temperatur zwischen 480 °C und 520 °C erhitzt wird.

4. Verfahren nach den Ansprüchen 1 bis 3,
**dadurch gekennzeichnet,**
**dass** der Druck des zweiten Dampfes (B) von 90 bis 180 bar beträgt.

5. Verfahren nach den Ansprüchen 1 bis 4,
**dadurch gekennzeichnet,**
**dass** der zweite Wärmetauscher (5) im Gegenstrom betrieben wird.

6. Verfahren nach einem jeden der vorhergehenden Ansprüche
**dadurch gekennzeichnet,**
**dass** die Geschwindigkeit der Verbrennungsgase durch den zweiten Wärmetauscher (5) ≤ 7 m/sec, vorzugsweise ≤ 5 m/sec beim Eintritt in den zweiten Wärmetauscher und zwischen 5 m/sec bis 12 m/sec am Ausgang des zweiten Wärmetauschers beträgt.

7. Verfahren nach einem jeden der vorhergehenden Ansprüche
**dadurch gekennzeichnet,**
**dass** ein vierter Wärmetauscher (6), welcher Verdampfungsrohre (6) aufweist, stromaufwärts des zweiten Wärmetauschers (5), in Strömungsrichtung des Verbrennungsgases gesehen, angeordnet ist.

8. Verfahren nach Anspruch 7,
**dadurch gekennzeichnet,**
**dass** der vierte Wärmetauscher (6) mindestens zwei Reihen von Verdampfungsrohren (6) aufweist, wobei die Reihen parallel zueinander und quer zur Strömungsrichtung des Verbrennungsgases angeordnet sind, und in welchem die Rohre der separaten Reihen, zumindest meistens, in der Strömungsbahn des Verbrennungsgases angeordnet sind.

9. Verfahren nach Anspruch 7 oder 8,
**dadurch gekennzeichnet,**
**dass** ein offener Zwischenraum (7) vorhanden ist, der den Verdampfungsrohren (6) folgt, um die Strömung der Verbrennungsgase zu egalisieren, wobei dieser offene Zwischenraum größer ist als die Entfernung zwischen jeder der Reihen von Rohren in dem vierten Wärmetauscher.

10. Verfahren nach Anspruch 9,
**dadurch gekennzeichnet,**
**dass** eine Reihe von Verdampfungsrohren (8) vor den Reihen von Rohren des zweiten Wärmetauschers (5) und nach dem offenen Zwischenraum (7) angeordnet ist.

11. Verfahren nach den Ansprüche 7 bis 10,
**dadurch gekennzeichnet,**
**dass** die Verdampfungsrohre (6, 8) in einem Abstand von mindestens 20 cm voneinander und vorzugsweise in einem Abstand von 35 cm bis 45 cm voneinander angeordnet sind.

12. Verfahren nach den Ansprüche 10 und 11,
**dadurch gekennzeichnet,**
**dass** die Verdampfungsrohre (8) einen größeren Durchmesser aufweisen als die Überhitzungsrohre, welche stromabwärts in Strömungsrichtung des Verbrennungsgases angeordnet sind.

13. Verfahren nach einem jeden der vorhergehenden Ansprüche,
**dadurch gekennzeichnet,**
**dass** der zweite Wärmetauscher (5) verschiedene Abschnitte (15, 16, 17) enthält, von denen jeder Überhitzungsrohre umfasst, die nicht exakt rund sind, und die ihren größten Durchmesser in Strömungsrichtung des Verbrennungsgases haben.

14. Verfahren nach Anspruch 13,
**dadurch gekennzeichnet,**
**dass** jede der Resonanzfrequenzen der nicht runden Überhitzungsrohre in verschiedenen Richtungen quer zur Längsrichtung der Rohre so gewählt ist, dass durch Aktivierung des Rohrstutzens die Rohre veranlasst werden können, mit unterschiedlichen Frequenzen in Resonanz zu treten.

15. Verfahren nach einem jeden der vorhergehenden Ansprüche,
**dadurch gekennzeichnet,**
**dass** der erste Dampf (A) bei einer Temperatur von 337 °C und einem Druck von 135 bar in dem zweiten Wärmetauscher (5) so erhitzt wird, dass er einen zweiten Dampf (B) bei einer Temperatur von 510 °C und einem Druck von 125 bar bildet.

16. Verfahren nach Anspruch 15,
**dadurch gekennzeichnet,**
**dass** der zweite Dampf (B) sich in der Turbine der ersten Stufe (26) entspannt, indem er den dritten Dampf (C) mit einer Temperatur von 180 °C und einem Druck von 8 bar bildet; der im Folgenden erhitzt wird, um einen fünften Dampf (D) mit einer Temperatur von 320 °C und einem Druck von 7,5 bar zu bilden; und danach sich in einer folgenden Turbinenstufe (28) so entspannt, dass er einen sechsten Dampf (E) mit einer Temperatur von 30 °C und einem Druck von 0,05 bar bildet.

17. Verfahren nach einem jeden der vorhergehenden Ansprüche,
**dadurch gekennzeichnet,**
**dass** Flugasche in zwei Strömen entnommen wird, wobei der erste Strom aus dem Verbrennungsgas bei einer Temperatur entnommen wird, die höher als 400 °C, vorzugsweise höher als 450 °C ist, und der zweite Strom aus dem Verbrennungsgas bei einer Temperatur entnommen wird, die niedriger oder gleich 500 °C und vorzugsweise niedriger oder gleich 450 °C ist.

18. Verfahren nach einem jeden der vorhergehenden Ansprüche,
**dadurch gekennzeichnet,**
**dass** Kondensat in einem, in Strömungsrichtung des Verbrennungsgases gesehen, zweiten Economiser durch Wärmeaustausch mit den Verbrennungsgasen, welche von der Müllverbrennungsanlage kommen, erhitzt wird, nachdem dieselben in einem Staubfilter von Staubpartikeln im Wesentlichen gereinigt sind, und bei einer solchen Temperatur und einem solchen Druck, dass die Kondensation von den gesättigten Verbrennungsgasen in dem zweiten Economiser erfolgt.

19. Verfahren nach einem jeden der vorhergehenden Ansprüche,
**dadurch gekennzeichnet,**
**dass** das Kondensat von der letzten Turbinenstufe in einem, in Strömungsrichtung des Verbrennungsgases gesehen, dritten Economiser durch Wärmeaustausch mit den Verbrennungsgasen nahe dem Ausgang der Verbrennungsgasreinigung erhitzt wird, wobei die Kondensation von den gesättigten Verbrennungsgasen in dem dritten Economiser erfolgt.

## Revendications

1. Procédé pour produire de la vapeur à l'aide d'un incinérateur de déchets, dans lequel une première vapeur (A) est formée à partir d'eau dans un premier échangeur de chaleur (29) en chauffant celle-ci avec des gaz d'évacuation provenant d'un incinérateur de déchets et est ensuite fournie à un ballon de vapeur (25), conduisant les gaz d'évacuation dans un deuxième échangeur de chaleur (5) le long de faisceaux de tuyaux à travers lesquels la première vapeur (A) provenant du ballon de vapeur (25) est fournie afin de créer une deuxième vapeur (B) à une température de au moins 450°C et à une pression d'au moins 70 bar, et dans lequel la deuxième vapeur (B) est fournie à un premier étage de turbine (26), **caractérisé en ce qu'**une troisième vapeur (C) quittant le premier étage de turbine (26) est chauffée à nouveau dans un troisième échangeur de chaleur (27) à l'aide d'une quatrième vapeur (A') qui provient du ballon de vapeur (25) afin de créer une cinquième vapeur (D) qui est fournie à au moins un étage de turbine successif (28).

2. Procédé selon la revendication 1, **caractérisé en ce que** la cinquième vapeur (D) est chauffée à nouveau jusqu'à une température d'au moins 200°C, de préférence de 280°C à 320°C.

3. Procédé selon les revendications 1 et 2, **caractérisé en ce que** la deuxième vapeur (B) est chauffée avant (d'entrer dans) la turbine jusqu'à une température de 480°C à 520°C.

4. Procédé selon les revendications 1 à 3, **caractérisé en ce que** la pression de la deuxième vapeur (B) est de 90 à 180 bar.

5. Procédé selon les revendications 1 à 4, **caractérisé en ce que** le deuxième échangeur de chaleur (5) est utilisé dans un écoulement à contre-courant.

6. Procédé selon l'une quelconque des revendications précédentes, **caractérisé en ce que** la vitesse des gaz d'évacuation à travers le deuxième échangeur de chaleur (5) est ≤ 7 m/sec, de préférence ≤ 5 m/sec au niveau de l'entrée du deuxième échangeur de chaleur, et est de 5 m/sec à 12 m/sec au niveau de la sortie du deuxième échangeur de chaleur.

7. Procédé selon l'une quelconque des revendications précédentes, **caractérisé en ce qu'**un quatrième échangeur de chaleur (6), qui comprend des tuyaux d'évaporation (6), est situé en amont du deuxième échangeur de chaleur (5), vu dans la direction d'écoulement du gaz d'évacuation.

8. Procédé selon la revendication 7, **caractérisé en ce que** le quatrième échangeur de chaleur (6) contient au moins deux rangs de tuyaux d'évaporation (6), lesdits rangs étant placés parallèles l'un à l'autre et perpendiculaire à la direction de l'écoulement du gaz d'évacuation, et dans lequel les tuyaux des rangs séparés sont placés au moins la plupart dans le passage d'écoulement du gaz d'évacuation.

9. Procédé selon la revendication 7 ou 8, **caractérisé en ce qu'**un espace libre (7) existe suivant les tuyaux d'évaporation (6) afin de régulariser l'écoulement des gaz d'évacuation, cet espace libre étant plus important que la distance entre chacun des rangs de tuyaux dans le quatrième échangeur de chaleur.

10. Procédé selon la revendication 9, **caractérisé en ce qu'**un rang de tuyaux d'évaporation (8) est situé avant les rangs de tuyaux du deuxième échangeur de chaleur (5) et après l'espace libre (7).

11. Procédé selon les revendications 7 à 10, **caractérisé en ce que** les tuyaux d'évaporation (6, 8) sont placés séparés les uns des autres selon une distance d'au moins 20 cm, et de préférence séparés les uns des autres selon une distance de 35 cm à 45 cm.

12. Procédé selon les revendications 10 à 11, **caractérisé en ce que** les tuyaux d'évaporation (8) ont un diamètre plus important que les tuyaux du surchauffeur qui sont situés en aval dans la direction d'écoulement du gaz d'évacuation.

13. Procédé selon l'une quelconque des revendications précédentes, **caractérisé en ce que** le deuxième échangeur de chaleur (5) est constitué de plusieurs sections (15, 16, 17) dont chacune est constituée de tuyaux de surchauffeur qui ne sont pas exactement ronds et qui ont leur diamètre le plus important dans la direction d'écoulement du gaz d'évacuation.

14. Procédé selon la revendication 13, **caractérisé en ce que** chacune des fréquences naturelles des tuyaux de surchauffeur non ronds dans diverses directions, perpendiculaires à la direction longitudinale des tuyaux, sont choisies de sorte qu'en actionnant le collecteur de tuyaux, il est possible de faire résonner les tuyaux avec différentes fréquences.

15. Procédé selon l'une quelconque des revendications précédentes, **caractérisé en ce que** la première vapeur (A) à une température de 337°C et une pression de 135 bar, est chauffée dans le deuxième échangeur de chaleur (5), afin de former la deuxième vapeur (B) à une température de 510°C et une pression de 125 bar.

16. Procédé selon la revendication 15, **caractérisé en ce que** la deuxième vapeur (B) dans la turbine dans le premier étage (26) est dilatée en formant la troisième vapeur (C) à une température de 180°C et une pression de 8 bar ; ensuite est chauffée pour former la cinquième vapeur (D) à une température de 320°C et une pression de 7,5 bar ; et enfin est dilatée dans l'étage de turbine successif (28) afin de former une sixième vapeur (E) à une température de 30°C et une pression de 0,05 bar.

17. Procédé selon l'une quelconque des revendications précédentes, **caractérisé en ce que** des cendres volantes sont retirées dans deux courants, dans lequel le premier courant est retiré du gaz d'évacuation à une température supérieure à 400°C, de préférence supérieure à 450°C, et un second courant est retiré du gaz d'évacuation à une température inférieure ou égale à 500°C, et de préférence inférieure ou égale à 450°C.

18. Procédé selon l'une quelconque des revendications précédentes, **caractérisé en ce que** le condensat est chauffé dans un, vu dans la direction d'écoulement de gaz d'évacuation, deuxième économiseur en échangeant de la chaleur avec des gaz d'évacuation provenant de l'incinérateur de déchets après que ceux-ci ont été essentiellement nettoyés pour en éliminer les particules de poussière dans un filtre à poussière, et à une température et pression telles que la condensation provenant des gaz d'évacuation saturés se produit dans le deuxième économiseur.

19. Procédé selon l'une quelconque des revendications précédentes, **caractérisé en ce que** le condensat provenant du dernier étage de turbine est chauffée dans un, vu dans la direction d'écoulement de gaz d'évacuation, troisième économiseur en échangeant de la chaleur avec les gaz d'évacuation près de la sortie du nettoyage de gaz d'évacuation, dans lequel la condensation provenant des gaz d'évacuation saturés se produit dans le troisième économiseur.
